# EUROPÄISCHE PATENTSCHRIFT

(11) **EP 1 792 823 B1**
(45) Veröffentlichungstag und Bekanntmachung des Hinweises auf die Patenterteilung: **13.01.2010**
(21) Anmeldenummer: 06024260.9
(22) Anmeldetag: 23.11.2006
(51) Int. Cl.: B62M 9/12

(54) **Vorderer Kettenumwerfer**
Front derailleur
Dérailleur avant

(30) Priorität: 03.12.2005 DE 102005057862
(43) Veröffentlichungstag der Anmeldung: 06.06.2007
(73) Patentinhaber: SRAM Deutschland GmbH, 97404 Schweinfurt (DE)
(72) Erfinder: Florczyk, Raymond, 97525 Schwebheim (DE)

(56) Entgegenhaltungen:
- EP-A- 0 348 977
- EP-A- 1 147 978
- EP-A- 1 314 636
- DE-A1- 10 036 768
- DE-A1- 19 706 156
- US-A- 4 223 562
- US-A- 5 312 301

## Beschreibung

Die vorliegende Erfindung betrifft einen vorderen Kettenumwerfer für ein Fahrrad, insbesondere ein Kettenführungselement zum Umwerfen einer Antriebskette, gemäß dem Oberbegriff von Anspruch 1.

Der Kettenumwerfer eines Fahrrades, insbesondere der vordere Kettenumwerfer befördert die Kette von einem der abgestuften vorderen Kettenblätter auf ein benachbartes anderes Kettenblatt. Dieser Umwerfvorgang wird von einer, im Wesentlichen quer zur Kettenlaufrichtung verlaufenden Schaltbewegung des Kettenführungselementes eingeleitet. Der Umwerfvorgang kann in beide Richtungen von einem großen oder mittleren Kettenblatt auf das nächst kleinere und von einem kleinen oder mittleren Kettenblatt auf das nächst größere erfolgen. Dabei läuft die Kette zwischen einer rahmenseitigen, inneren und einer äußeren Führungsplatte des Kettenführungselementes und wird entsprechend der gewünschten Schaltrichtung entweder von der inneren oder äußeren Führungsplatte auf das benachbarte Kettenblatt befördert. Diese Führungsplatten verfügen über eine auf die jeweilige Schaltrichtung angepasste Innenkontur.

In der EP 1 314 636 A2 wird ein Kettenführungselement in Form eines die Kette umschließenden Käfigs mit einer inneren und äußeren Führungsplatte gezeigt. Die Innenkontur der äußeren Führungsplatte ist nach innen geformt und zeigt einen oberen, mittleren und unteren Bereiche mit unterschiedlicher Form und Erhebung. Der obere Bereich der Innenkontur kontaktiert die Kette, wenn sie vom großen auf das mittlere Kettenblatt befördert werden soll. Der untere Bereich kommt beim Umwerfen der Kette vom mittleren zum kleinen Kettenblatt zum Einsatz. Dabei ist die sich in das Innere des Kettenführungselementes erstreckende Erhebung der Innenkontur im unteren Bereich größer als im oberen Bereich, wo die Erhebung mit einer nach oben und nach vorne gerichteten Spitze ausläuft. Insgesamt ist die Breite der die Kette berührenden Führungsfläche an der Innenkontur, in Kettenrichtung betrachtet, relativ schmal. Da die Kette, beim Schaltvorgang auf ein kleineres Kettenblatt, an der Führungsfläche entlang streift und von dieser aus der Bahn und auf ein kleineres Kettenblatt umgeworfen wird, rattert die Kette über die Innenkontur. Dabei berührt die schmale Führungsfläche die Außenlaschen und taucht jeweils in den Bereich der Innenlaschen ein. Das hierdurch hervorgerufene Schaltgeräusch tritt auch bei vielen anderen Umwerferkonzepten und Kettenführungselementen in Erscheinung und wird als äußerst störend empfunden.

Dokument EP-A-1314636 offenbart eine Anordnung eines vorderen Kettenwerfers gemäß dem Oberbegriff von Anspruch 1.

Ausgehend vom Stand der Technik liegt der Erfindung die Aufgabe zugrunde, einen vorderen Kettenumwerfer mit einem Kettenführungselement zu schaffen, das beim Schaltvorgang von einem großen auf ein kleineres Kettenblatt ein kurzzeitiges Eintauchen der Führungsfläche zwischen die Außenlaschen der Kette und das hierdurch entstehende Schaltgeräusch mit einfachen, kostengünstigen Mitteln unterbindet.

Die Lösung der Aufgabe wird gemäß den kennzeichnenden Merkmalen von Anspruch 1 im Wesentlichen durch eine verbreiterte Führungsfläche an der Innenkontur des Kettenführungselementes realisiert. Die verbreiterte Führungsfläche verhindert das Eintauchen der Führungsfläche in den Bereich zwischen den Außenlaschen. Die Länge der Führungsfläche in Kettenlaufrichtung ist dabei größer als der entsprechende Abstand der Außenlaschen. Dies gilt auch für den nach oben erweiterten Abschnitt der Innenkontur, der die beim Schaltvorgang am großen Kettenblatt aufsteigende Kette führt.

Am vorgeschlagenen vorderen Kettenumwerfer ist ein Kettenführungselement schwenkbar angelenkt. Dieses Kettenführungselement verfügt über eine innere und äußere Führungsplatte mit einer den jeweiligen Schaltvorgang unterstützenden Innenkontur. Die Innenkontur an der äußeren Führungsplatte erstreckt sich soweit nach unten bzw. nach oben, dass sie im eingebauten Zustand die auf dem großen und dem nächst kleineren bzw. mittleren Kettenblatt befindliche Kette bei axialer Verschiebung des Kettenführungselementes aus ihre Bahn werfen kann. Die Innenkontur ist nach oben verlängert um die Kette auch noch während des Umwerfvorganges, wenn sie über die Zähne des großen Kettenblattes steigt, seitlich zu führen. Die Innenkontur hat gegenüber der Außenfläche der äußeren Führungsplatte eine konstante Erhebung. Der Übergang zur Führungsfläche ist abgerundet oder mit einer Schräge ausgestattet. Die sich in Kettenlaufrichtung ergebende Länge der Führungsfläche ist größer als der Abstand der Kettenaußenlaschen. Kommt eine Kette mit überstehenden Kettenbolzen zum Einsatz, so empfiehlt es sich, die Länge der Führungsfläche in Kettenlaufrichtung größer als den Bolzenabstand zu konzipieren.

Die äußere Führungsplatte erstreckt sich ohne Erhebung bzw. Innenkontur soweit in Fahrtrichtung, dass ein Überspringen der Kette über das große Kettenblatt bei einem Schaltvorgang vom benachbarten auf das große Kettenblatt sicher verhindert wird.

Mit der verbreiterten Führungsfläche an der äußeren Führungsplatte wird eine deutliche Geräuschreduzierung des Schaltvorganges von einem großen auf ein benachbartes kleineres Kettenblatt mit geringem Aufwand erzielt.

### Kurzbeschreibung der Zeichnungen

Die vorliegende Erfindung wird mit Bezug auf die beigefügten Zeichnungen detailliert beschrieben, wobei die Zeichnungen lediglich als nicht beschränkendes Beispiel anzusehen sind.
- Fig. 1: zeigt eine Ansicht des Kettenführungselementes eines vorderen Kettenumwerfers mit einer breiten Innenkontur
- Fig. 2: zeigt eine 3 D-Darstellung der äußeren Führungsplatte mit anliegender Kette

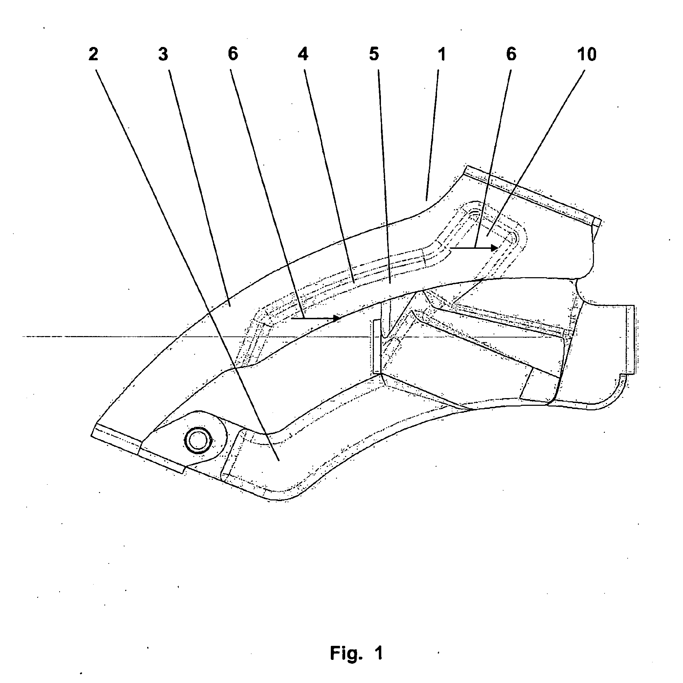

Figur 1 zeigt eine Ansicht des Kettenführungselementes 1 mit einer inneren Führungsplatte 2 sowie einer äußeren Führungsplatte 3. Das Kettenführungselement 1 bildet einen geschlossenen Kettenkäfig und umschließt die Kette. Die in den Kettenkäfig hineinragende Innenkontur 4 erstreckt sich nicht entlang der ganzen äußeren Führungsplatte 3, sondern deckt nur den Bereich des Kettenverlaufes zum zweitgrößten und zum größten Kettenblatt ab, einschließlich des Überspringweges, den die Kette beim Überspringen des großen Kettenblattes überstreicht. Eine Weiterführung der Innenkontur 4 nach unten ist nicht erforderlich, da die Kette nicht über das kleinste Kettenblatt hinaus befördert werden soll. Eine Weiterführung der Innenkontur 4 nach vorne, vor den oberen Abschnitt 10 der Innenkontur 4, wirkt sich negativ auf das Schaltverhalten zum größten Kettenblatt aus, da eine nach vorne verlängerte Innenkontur 4 das Aufspringen der Kette auf das große Kettenblatt behindern würde. Die Innenkontur 4 bildet eine Führungsfläche 5 mit einer gegenüber der Außenfläche der äußeren Führungsplatte 3 konstanten Erhebung. Beim Schaltvorgang von einem größeren auf ein kleineres Kettenblatt streift die Kette an der Führungsfläche 5 entlang und wird von dieser aus der Bahn befördert. Diese Führungsfläche 5 verfügt in Kettenlaufrichtung über eine Abrundung oder eine Anfasung, damit sich die Kette beim Schaltvorgang nicht an einer scharfen Kante verhakt. Die Führungsfläche 5 ist so konzipiert, dass sie in Kettenlaufrichtung 6 betrachtet mindestens so breit ist wie der Abstand der äußeren Kettenlaschen und, wenn Ketten mit vorstehenden Kettenbolzen zum Einsatz kommen, mindestens so breit wie der Kettenbolzenabstand ist. Die zum Käfiginneren gerichtete konstante Erhebung der Innenkontur 4 zeigt keinen Absatz an der Führungsfläche 5 zwischen dem Bereich des Kettenverlaufes zum zweitgrößten und größten Kettenblatt. Dies vereinfacht die Herstellung, insbesondere die Kaltumformung des Kettenführungselementes 1.

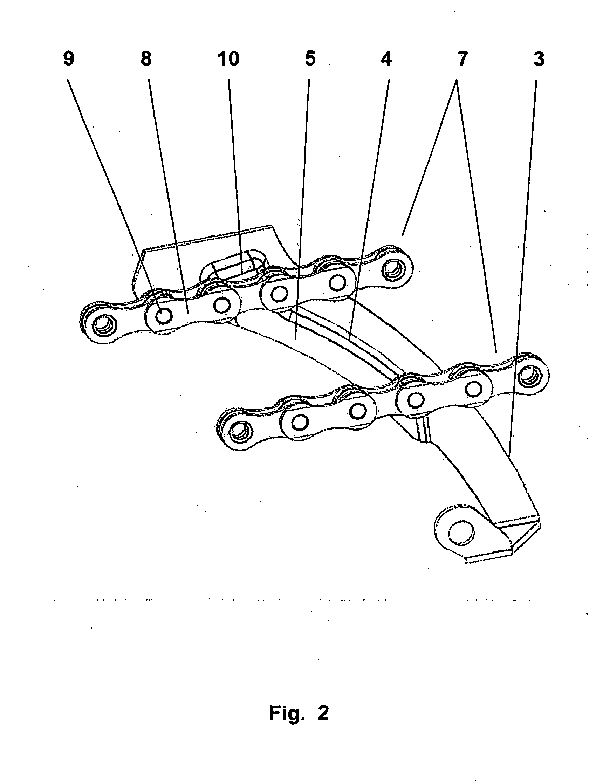

Figur 2 zeigt die äußere Führungsplatte 3 mit anliegenden Kettenabschnitten 7, die sich im Bereich des größten und des benachbarten zweit größten Kettenblattes befinden. Die äußere Führungsplatte ist mit einer in Kettenrichtung zeigenden Innenkontur 4 ausgestattet, die mit der Führungsfläche 5 beim Schaltvorgang die Kette auf das nächst kleinere Kettenblatt befördert. Der Übergang auf die Führungsfläche 5 ist in Kettenlaufrichtung abgerundet, so dass die Kette mit den Außenlaschen 8 bzw. mit den eventuell vorstehenden Kettenbolzen 9 ruckfrei und damit auch geräuschfrei auf die Führungsfläche aufgleiten kann. Die Breite der Führungsfläche 5 ist in Kettenlaufrichtung z. B. im Bereich des unteren Kettenabschnittes 7 mindestens so groß wie der Abstand der Außenlaschen 8 und im Bereich des oberen Kettenabschnittes 7 mindestens so groß wie der Abstand der Kettenbolzen 9. Hierdurch wird das Eintauchen der Führungsfläche 5 zwischen die Außenlaschen 8 bzw. die Kettenbolzen 9 beim Schaltvorgang und eine damit verbundene Geräuschentwicklung verhindert. Die Erhebung der Innenkontur 4 bzw. der Führungsfläche 5 ist gegenüber der Außenfläche der äußeren Führungsplatte 3 konstant und besitzt keinen Absatz, an dem die Kette beim Schaltvorgang anlaufen und ein Geräusch verursachen könnte. Die Innenkontur 4 erstreckt sich lediglich über einen Bereich des Kettenverlaufes zu den beiden größten Kettenblättern einschließlich des Überspringweges der Kette am größten Kettenblatt. Der Überspringweg ergibt sich, wenn die Kette, beim Schaltvorgang von einem größeren auf ein kleineres Kettenblatt aus der Zahnkontur heraus befördert wird und die entsprechende Kettenlasche über den Zahnkopf hinweg zum nächst kleineren Kettenblatt springt. Eine Weiterführung der Innenkontur 4 nach unten ist nicht erforderlich, da ein Schaltvorgang über das kleinste Kettenblatt hinaus nicht erfolgen soll. Eine Weiterführung des oberen Abschnittes 10 der Innenkontur 4 nach vorne würde den Schaltvorgang vom zweitgrößten auf das größte Kettenblatt behindern. Dieser vor dem oberen Abschnitt 10 befindliche Bereich der äußeren Führungsplatte 3 ist erforderlich, um das Abspringen der Kette, bei einer Bewegung der Kette, die über das größte Kettenblatt hinaus geht, sicher zu unterbinden.

### Bezugszeichenliste

- 1: Kettenführungselement
- 2: Innere Führungsplatte
- 3: Äußere Führungsplatte
- 4: Innenkontur
- 5: Führungsfläche
- 6: Kettenlaufrichtung
- 7: Kettenabschnitt
- 8: Außenlasche
- 9: Kettenbolzen
- 10: Oberer Abschnitt

## Patentansprüche

1. Anordnung von einem vorderen Kettenumwerfer, einer Kette und 3 unterschiedlich großen Kettenblättern,
wobei der vordere Kettenumwerfer ein Kettenführungselement (1) aufweist, das mit einer inneren Führungsplatte (2) und einer äußeren Führungsplatte (3) ausgestattet ist,
wobei die äußere Führungsplatte (3) eine Innenkontur (4) mit einer zur Kette ausgerichteten Führungsfläche (5)
mit einer ununterbrochenen Längsausdehnung in einem unteren Abschnitt und einem oberen Abschnitt (10) hat;
wobei der untere Abschnitt sich entlang der unteren Kante der äußeren Führungsplatte (3) von dem Bereich des Kettenverlaufs zum mittleren Kettenblatt hin zum Bereich des Kettenverlaufs zum größten Kettenblatt hin erstreckt,
wobei weiterhin der obere Abschnitt (10) sich von der unteren Kante der äußeren Führungsplatte (5) weg erstreckt
**dadurch gekennzeichnet,**
**dass** die Breite der Führungsfläche (5) in Kettenlaufrichtung (6) mindestens so groß ist wie der Abstand der aufeinander folgenden Außenlaschen (8) der Kette;
wobei die Führungsfläche (5) eine konstante Erhebung ohne Absatz gegenüber der Oberfläche der äußeren Führungsplatte (3) aufweist und die Kette während der Schaltvorgänge zum benachbarten, nächst kleineren Kettenblatt über die Führungsfläche (5) gleitet.

2. Anordnung nach Anspruch 1,
**dadurch gekennzeichnet,**
**dass** an der äußeren Führungsplatte (3), vor dem oberen Abschnitt (10) der Innenkontur (4) bzw. der Führungsfläche (5), ein nach vorne gerichteter Bereich ohne Erhebung angeordnet ist.

3. Anordnung nach Anspruch 1,
**dadurch gekennzeichnet,**
**dass** die Breite der Führungsfläche (5) in Kettenlaufrichtung (6) mindestens so groß ist, wie der Abstand der Kettenbolzen (9), wenn eine Kette mit vorstehenden Kettenbolzen (9) zum Einsatz kommt.

## Claims

1. Arrangement of a front derailleur, a chain and 3 differently sized chain leaves, wherein the front derailleur has a chain-guiding element (1) which is provided with an inner guide plate (2) and an outer guide plate (3), wherein the outer guide plate (3) has an inner contour (4) with a guide surface (5) which is aligned with respect to the chain and has an uninterrupted longitudinal extent in a lower section and an upper section (10); wherein the lower section extends along the lower edge of the outer guide plate (3) from the chain-running region towards the central chain leaf to the chain-running region towards the largest chain leaf, and wherein, furthermore, the upper section (10) extends away from the lower edge of the outer guide plate (3), **characterized in that** the width of the guide surface (5) in the chain-running direction (6) is at least the same size as the distance between the consecutive outer link plates (8) of the chain; the guide surface (5) having a constant elevation without a step in relation to the surface of the outer guide plate (3) and the chain sliding over the guide surface (5) to the adjacent, next smaller chain leaf during the gear-changing operation.

2. Arrangement according to Claim 1, **characterized in that** a forwardly directed region without an elevation is arranged on the outer guide plate (3) before the upper section (10) of the inner contour (4) and guide surface (5).

3. Arrangement according to Claim 1, **characterized in that** the width of the guide surface (5) in the chain-running direction (6) is at least the same size as the distance between the chain studs (9) when a chain having protruding chain studs (9) is used.

## Revendications

1. Agencement d'un dérailleur avant, d'une chaîne et de 3 plateaux de tailles différentes,
le dérailleur avant présentant un élément de guidage de chaîne (1) qui est muni d'une plaque de guidage interne (2) et d'une plaque de guidage externe (3), la plaque de guidage externe (3) présentant un contour interne (4) avec une surface de guidage (5) orientée vers la chaîne,
avec une étendue longitudinale ininterrompue dans une portion inférieure et une portion supérieure (10) ;
la portion inférieure s'étendant le long de l'arête inférieure de la plaque de guidage externe (3) depuis la région d'étendue de la chaîne jusqu'au plateau central, jusqu'à la région d'étendue de la chaîne jusqu'au plus grand plateau, la portion supérieure (10) s'étendant en outre depuis l'arête inférieure de la plaque de guidage externe (3),
**caractérisé en ce que**
la largeur de la surface de guidage (5) dans la direction d'avance de la chaîne (6) est au moins aussi grande que la distance entre les flasques extérieurs successifs (8) de la chaîne ;
la surface de guidage (5) présentant un rehaussement constant sans épaulement par rapport à la surface de la plaque de guidage externe (3), et la chaîne glissant sur la surface de guidage (5) pendant les opérations de changement de vitesse jusqu'au plateau adjacent plus petit.

2. Agencement selon la revendication 1,
**caractérisé en ce que**
qu'une région sans rehaussement orientée vers l'avant est prévue sur la plaque de guidage externe (3), avant la portion supérieure (10) du contour interne (4) ou de la surface de guidage (5).

3. Agencement selon la revendication 1,
**caractérisé en ce que**
la largeur de la surface de guidage (5) dans la direction d'avance de la chaîne (6) est au moins aussi grande que la distance entre les boulons de la chaîne (9), lorsque l'on utilise une chaîne avec des boulons de chaîne saillants (9).
